# EUROPEAN PATENT APPLICATION

(11) **EP 1 085 246 A2**
(43) Date of publication of application: **21.03.2001**
(21) Application number: 00830450.3
(22) Date of filing: 26.06.2000
(51) Int. Cl.: F16L 25/00, F16L 41/00

(54) **Leak-proof coupling system for corrugated tube with a well**

(30) Priority: 17.09.1999 IT BS990088 U
(71) Applicant: Polieco S.r.l., 25046 Cazzago S. Martino (Brescia) (IT)
(72) Inventor: Tonelli, Luigi, 25040 Timoline di Cortefranca (Brescia) (IT)
(74) Representative: Manzoni, Alessandro

(57) **Abstract**

This invention concerns a coupling system for a corrugated tube with an inspection well which has two or more ways, in each of which a tube can be fastened. Between the corrugated tube (11) and the well (12) there is a gasket (14), shaped in such a way as to block the corrugated tube axially and radially to the well, making a leak-proof joint between the two coupled parts.

## Description

This invention refers to the field of corrugated tubes and, in particular, to a coupling system between a corrugated tube and an inspection well.

On the one hand, ribbed or corrugated tubes, made in plastic and with or without an internal lining, are well-known, and, on the other hand, so are inspection wells with two or more ways, also made in plastic.

The purpose of this invention is to resolve efficiently and profitably the problem of a safe and leak-proof coupling of such ribbed or corrugated tubes with said wells, where, previously, it was either never done or only with difficulty.

The problem was resolved, according to the invention, by a gasket with a special shape, which, when placed between the corrugated tube and the wall of the well, allows the two components to be tightly fastened in a leak-proof joint.

Another aim of the invention is to supply a well that can receive and couple with more than one type of elevation or with a conical reducer, irrespectively of the horizontal position of the well.

This second aim was achieved according to the invention by fitting the well with a mouth at the top, with a truncated cone shape, or, better, a double cone.

Greater detail of the invention will become clear from the following description, made with reference to the enclosed drawings, where:
Fig. 1 shows an exploded view of the well, the corrugated tubes and an elevation, ready to be assembled;
Fig. 2 shows a tube-well coupling;
Fig. 3 shows an enlarged cross-section of the gasket between the tube and well;
Fig. 4 shows a well-elevation coupling; and
Fig. 5 shows a well-conical reducer coupling.

In the drawings, a corrugated tube is indicated by number 11, and may have any diameter.

Number 12 indicates a well, which may have two or more ways 13, with parts to break open in order to define the openings for fastening the tube inside.

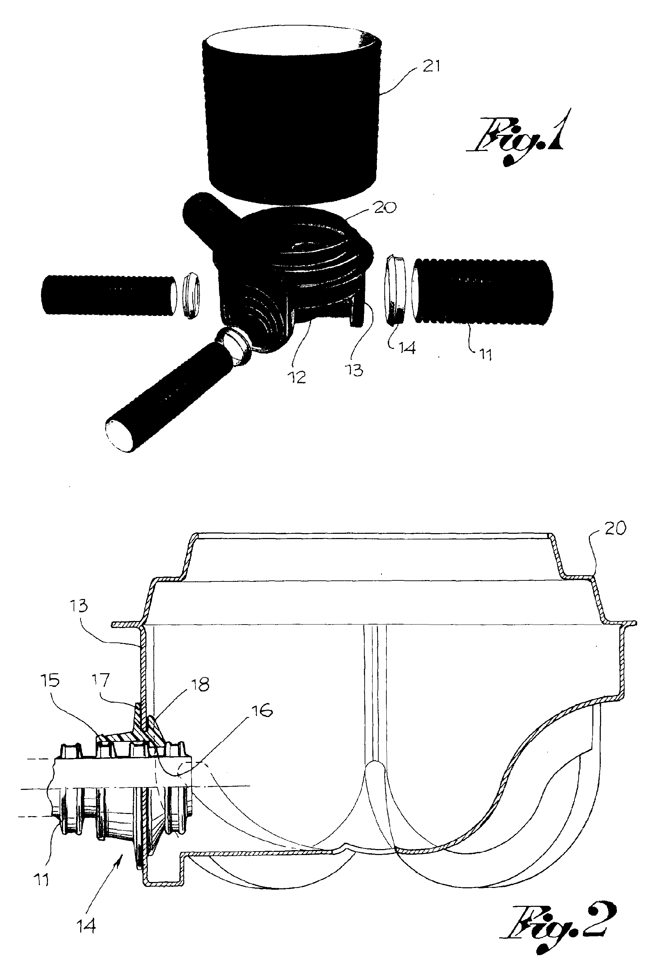

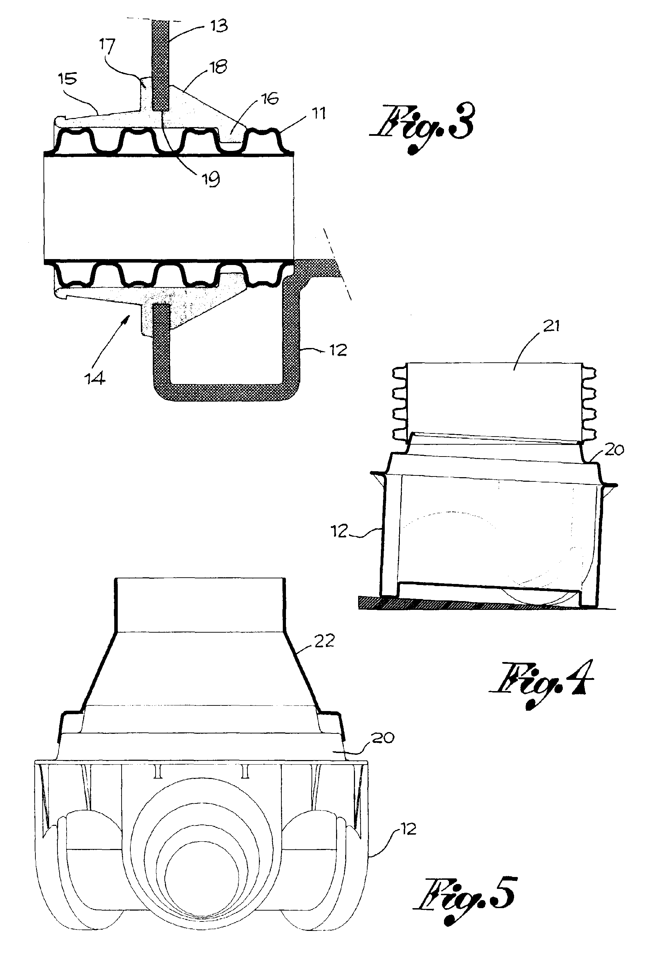

The coupling between the corrugated tube 11 and the well 12 is achieved, according to the invention, by interposing a ring gasket 14, as shown in Fig. 3, in particular. This gasket consists of an axial ring section 15, which embraces part of the tube 11, at least one internal ring part 16, protruding radially towards the axis of the gasket and designed to fit in the dip between two adjacent ribs of the tube 11, and two external radial lips 17, 18, which, together, define a housing 19 for gripping the part of the wall around the well opening into which the tube is inserted.

The coupling is shown in Fig. 2. It shows how the gasket makes it possible to hold the tube axially, fastened to the well and, at the same time, having a leak-proof joint between the two coupled elements, despite the ribbed surface of the tube and even with an off-set tube. Furthermore, the internal and external pressure help the tightness of the hold.

According to another characteristic, the well 12 has a truncated cone mouth 20 on the top, preferably double-coned, that is, with two diameters on which it is possible to fasten the tubular elevations 21 of corresponding diameter - Fig. 4 - or a conical reducer 22, as required. This truncated cone shape facilitates the insertion of the elevation or the reducer, guaranteeing a perfect water-tight hold when properly fastened. Furthermore, the structure allows the base to be placed according to the slope of the pipe, while the elevation or the reducer remain in a vertical position. The well, therefore, offers the advantage of not interrupting the pipe angle and keeping the flow loss to a minimum.

## Claims

1. Coupling system for a corrugated tube with an inspection well which has two or more ways, in each of which a tube can be fastened, characterised by the fact that between the corrugated tube (11) and the well (12) there is a gasket (14), shaped so as to fasten the corrugated tube axially and radially to the well, and giving a leak-proof joint between the two coupled components.

2. System according to claim 1, in which said gasket (14) has an axial ring part (15) which embraces part of the tube externally, an internal radial part (16) which fits into the dip between two adjacent ribs of the tube, and a couple of outer radial lips (17, 18) which, together, define a housing for receiving a part of the wall of the well around the opening into which the tube is fastened.

3. System according to claims 1 and 2, in which the well has a truncated cone mouth (20) at the top for joining to a tubular elevation (21) or conical reducer.

4. System according to claim 3, in which said truncated cone mouth is double-coned, or has two different diameters.
